# EUROPEAN PATENT SPECIFICATION

(11) **EP 3 992 778 B1**
(45) Date of publication and mention of the grant of the patent: **22.02.2023**
(21) Application number: 20205279.1
(22) Date of filing: 02.11.2020
(51) Int. Cl.: G06F 8/60, H04L 67/10

(54) **A COMPUTER-IMPLEMENTED METHOD FOR TRANSFERRING OTA DATA TO A FLEET OF VEHICLES, A BACKEND SERVER, A TRANSPORTATION SYSTEM**
COMPUTERIMPLEMENTIERTES VERFAHREN ZUR ÜBERTRAGUNG VON OTA-DATEN AN EINE FAHRZEUGFLOTTE, BACKEND-SERVER, TRANSPORTSYSTEM
PROCÉDÉ MIS EN UVRE PAR ORDINATEUR PERMETTANT DE TRANSFÉRER DES DONNÉES OTA VERS UNE FLOTTE DE VÉHICULES, SERVEUR DORSAL, SYSTÈME DE TRANSPORT

(43) Date of publication of application: 04.05.2022
(73) Proprietor: Toyota Jidosha Kabushiki Kaisha, Toyota-shi, Aichi-ken 471-8571 (JP)
(72) Inventor: ANDO, Yasushi, 1140 Brussels (BE)
(74) Representative: Cabinet Beau de Loménie

(56) References cited:
- WO-A1-2013/022183
- WO-A1-2014/021502
- US-A1- 2020 280 842
- YI CAO ET AL: "SDN enabled content distribution in vehicular networks", FOURTH EDITION OF THE INTERNATIONAL CONFERENCE ON THE INNOVATIVE COMPUTING TECHNOLOGY (INTECH 2014), IEEE, 13 August 2014 (2014-08-13), pages 164-169, XP032663981, DOI: 10.1109/INTECH.2014.6927762 [retrieved on 2014-10-16]

## Description

### FIELD OF THE DISCLOSURE

The present disclosure concerns backend servers and systems to perform over-the-air (OTA) distribution of data to vehicles.

### BACKGROUND OF THE DISCLOSURE

Known methods for the distribution of data over the air, to various types of terminals, are for instance disclosed by documents WO 2013/022183, which discloses a system for controlling a network for downloading an online game file that has a connection sensing unit which is provided for sensing the connection to a peer-to-peer (P2P) communication network of user terminals. The user terminal is connected to the network of a download server in order to directly transmit the file in the user terminal, if file download speed is less than critical speed. The server network sensor is provided for determining whether the user terminal is connected to network of download server. The network environment of the download server is checked.

WO 2014/021502 discloses a method for controlling data transmission and reception in a peer-to-peer (P2P) network, and involves determining the possibility or impossibility for connection of the user terminal and information management server according to the answer signal and the connection request signal. The data is controlled in which the reception is requested from the user terminal among the immediateness connection process. Data is received either from direct download server or using the peer-to-peer connection. US 2020/280842 discloses security certificate management for use in vehicle-to-everything communication, involves generating a list of vehicle security data (VSD) to be distributed to motor vehicles currently within a device coverage area based on a context related to the vehicles. A control channel communicatively coupling the device and the motor vehicles announces that the list of VSD is available. A service channel receives the list of VSD. The list of VSD are provided to the motor vehicles via the service channel.

OTA distribution of data has proved to be a very efficient solution to distribute data specifically to vehicles. Usually, a number of backend servers are set up, which distribute data over the air to the fleet of vehicles. (Herein, OTA data refers to any file or files that is/are to be transmitted by OTA transmission. These files may be typical data files (e.g. maps); they can also be software code, for instance updates of the software code of the vehicles). In this scheme, each vehicle of a fleet may receive some OTA data, that is to be downloaded to the vehicle, from one of the backend servers.

However, when a very large number of vehicles has to receive data by OTA transmission, the amount of data to be transmitted by the OTA servers may become extremely large. Therefore, the load for the servers may be high, which may increase the transmission time; as an alternative, the cost or number of servers required to distribute the OTA data may increase. Accordingly, there is a need for a solution to facilitate the transfer of OTA data to a large fleet of vehicles, which does not require massive investments in OTA transmission systems.

### DISCLOSURE OF THE INVENTION

In order to address this need, the computer-implemented method defined by claim 1 is proposed for transferring OTA data from a backend server to a fleet of vehicles.

Accordingly, the V2V distribution mode is a mode for distributing OTA data to the vehicles of the fleet in which, when some data has to be transferred over the air to the vehicles (called 'to-be-transferred OTA data'), this transfer can take place by indirect transmission of the OTA data from the server to at least some vehicles of the fleet, called the 'non-distributor vehicles. This indirect transmission advantageously uses some vehicles of the fleet (the 'distributor vehicles') as relays, which transmit the OTA data they have received from the backend server to the non-distributor vehicles.

Conversely, the distributor vehicles receive the OTA data directly from the backend server.

Consequently, since the backend server in this mode may not have to transfer the OTA data to all the vehicles (for instance, in some embodiments, only to the distributor vehicles), in most cases the download load of the backend server advantageously is reduced.

The number of distributor vehicles is strictly less than the total number of vehicles of the fleet.

Preferably, the distributor vehicles are selected based at least on a data exchange speed thereof with the backend server. For instance, the vehicles selected as distributor vehicles are vehicles whose data exchange speed with the backend server is higher than that of the non-distributor vehicles.

In some variants of the above method, the method further comprises, when it is determined that the download load is above the threshold, deactivating the direct distribution mode, so as to limit transfers of data over the air (OTA) from the backend server only to transfers from the backend server to the distributor vehicles.

In some embodiments, the method further comprises:
S10) determining whether a transfer of data over the air is given higher download (or transfer) priority; and
S20) when it is determined that the transfer of the data over the air is given higher download priority, activating the direct distribution mode and the V2V distribution mode regardless of the download load of the backend server.

In the context of the present disclosure, a higher priority is given to the transfer of OTA data for instance when the transfer of the OTA data is critical to ensure the safety of the vehicles; for instance, when a bug has been identified in a software code, the transfer of the updated code (as OTA data) which corrects this bug is given higher priority, so that the updated code be transferred as quickly as possible to all the vehicles of the fleet.

A second purpose of the present disclosure is to propose a backend server as defined by claim 5, which facilitates the transfer of data over the air to large fleets of vehicles.

In some embodiments of the backend server, the instructions, when executed by the one or more processors while the V2V distribution mode is activated, further cause the one or more processors to:
S240) transmit to the distributor vehicles a distribution task of transferring said to-be-transferred-over-the-air data from the distributor vehicle to non-distributor vehicles of the fleet.

In some variants of the above-mentioned backend server, the instructions, when executed by the one or more processors, further cause the one or more processors, when it is determined that the download load is above a threshold, to deactivate the direct distribution mode, so as to limit transfers of data over the air from the backend server only to transfers from the backend server to the distributor vehicles.

In some embodiments of the backend server, the instructions, when executed by the one or more processors, further cause the one or more processors:
S10) to determine whether a transfer of data over the air is given higher download (or transfer) priority (i.e., is urgent); and
S20) when it is determined that the transfer of the data over the air is given higher download priority, to activate the direct distribution mode and the V2V distribution mode regardless of the download load of the backend server.

In some embodiments of the backend server, the instructions, when executed by the one or more processors, cause the one or more processors to select the distributor vehicles based at least on a data exchange speed thereof with the backend server.

The present disclosure further includes a transportation system comprising a fleet of vehicles and at least one backend server as defined above, and wherein at least one vehicle comprises:
a connectivity unit configured to send and receive data to and from the server and the other vehicles of the fleet; and
a gateway unit configured:
   - to receive, via the connectivity unit, information that the V2V distribution mode is activated;
   - to receive, via the connectivity unit, data to be transferred over the air to vehicles of the fleet; and
   - when the V2V distribution mode is activated and when data transferred over the air has been received, to transfer or to attempt to transfer the data transferred over the air to other vehicles of the fleet via the connectivity unit.

In some embodiments of this transportation system, the fleet of vehicles comprises a plurality of vehicles of at least one of the following categories: road vehicles, aerial vehicles, marine vehicles, manned vehicles, unmanned vehicles, mobile machines, mobile robots.

In a particular implementation, the proposed method is determined by computer program instructions.

Accordingly, another purpose the present disclosure is to propose one or more computer program(s) comprising instructions which, when the instructions are executed by a computer, cause the computer to carry out the steps of one of the afore-mentioned methods, in accordance with the present disclosure. The computer program(s) may use any programming language, and be in the form of source code, object code, or code intermediate between source code and object code, such as in a partially compiled form, or in any other desirable form. The computer may be any data processing means, for instance a personal computer, one or more remote servers, etc.

The present disclosure also includes a non-transitory computer readable medium having the above-defined computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

### BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which :
Fig.1 is a schematic view of a transportation system according to the present disclosure;
Fig.2 is a schematic view of a cross-section of a vehicle of the transportation system shown on Figure 1;
Fig.3 is a bloc diagram illustrating the steps of a main program implemented in the transportation system of Fig.1;
Fig.4 is a bloc diagram illustrating the steps of a direct distribution program implemented in the transportation system of Fig.1; and
Fig.5 is a bloc diagram illustrating the steps of a V2V distribution program implemented in the transportation system of Fig.1.

### DESCRIPTION OF PREFERRED EMBODIMENTS

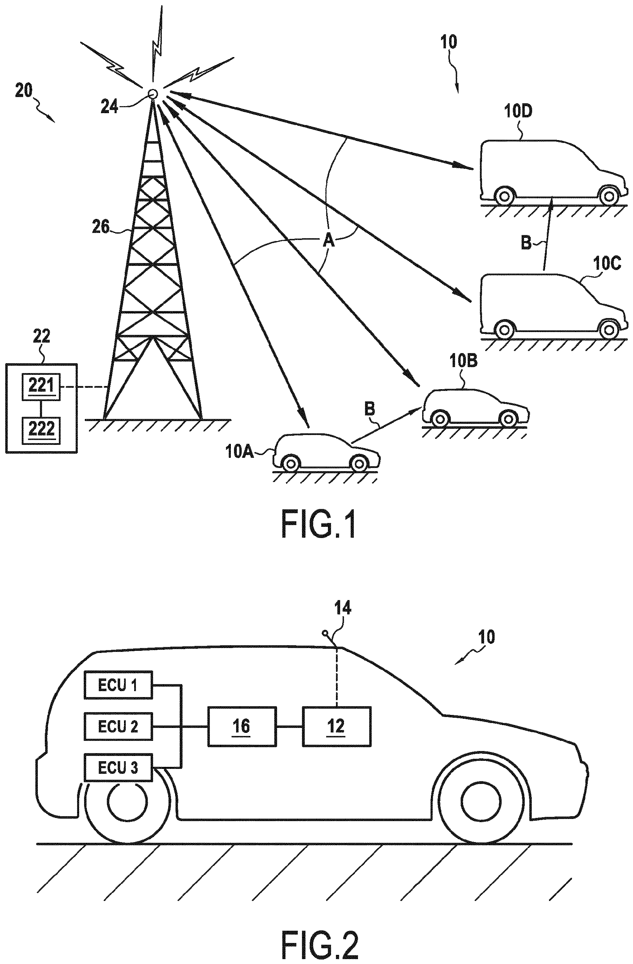

A transportation system 100 according to the present disclosure will now be presented in relation with Figs.1 and 2.

The transportation system 100 comprises a fleet 10 of vehicles 10A,10B,10C, 10D and at least one backend server 20.

In the present embodiment, the vehicles 10A-10D are road vehicles. The fleet may comprise instead (or also) other types of vehicles, for instance aerial or marine vehicles. These vehicles may be manned or unmanned vehicles (including all sorts of mobile machines and/or robots).

System 100 may comprise a plurality of backend servers 20. One of them is shown on Fig.1.

A vehicle 10 (which may represent any one of vehicles 10A-10D) is shown on Fig.2. It comprises a connectivity unit 12 having an antenna 14, a gateway unit 16, and a plurality of electronic control units (ECUs). Only three ECUs ECU1, ECU2 and ECU3 are shown on Fig.2 but vehicle 10 may comprise any number of ECUs. The electronic units ECUs handle various functions aboard vehicle 10, such as engine control, heating-ventilation-air-conditioning control, etc., as known per se.

The connectivity unit 12 is configured to send and receive data to and from the backend server 20 and the other vehicles of fleet 10.

The gateway unit 16 is configured to receive various information, in particular from the backend server, via the connectivity unit 12:
- an information that the V2V distribution mode is activated;
- to-be-transferred OTA data, which is data that has to be transferred to vehicles of the fleet.

The gateway unit 16 is further configured, when the V2V distribution mode is activated and when to-be-transferred OTA data has been received, to transfer or to attempt to transfer the to-be-transferred OTA data to the other vehicles of fleet 10. Such transmission is performed via the connectivity unit 12.

The backend server 20 comprises a computer 22 and an antenna 24 mounted on top of a mast 26.

The computer 22 comprises one or more processors 221, and a computer-readable medium 222 which is a read-only memory (ROM).

The computer-readable medium 222 comprises computer instructions stored therein. These instructions, when executed by the one or more processors, cause the one or more processors to perform the steps of the method according to the present disclosure.

The antenna 24 constitutes a network interface coupled to the processor 221, which makes it possible for computer 22 to exchange data with the vehicles of fleet 10.

While computer 20 is represented on Fig.1 as a single computer (in one housing), it should be understood that computer 20 can be any kind of computer or data processing system. It can be a single machine, or it can be distributed; in particular, it may include servers in the cloud, etc.

In addition, the backend server 20 may be any suitable cellular telephone system that includes one or more of the following components (e.g., depending on the cellular technology): cellular towers, base transceiver stations, mobile switching centers, base station controllers, evolved nodes (e.g., eNodeBs), mobility management entities (MMEs), serving and PGN gateways, etc., as well as any other networking components required to connect the backend server with connectivity units mounted in vehicles 10A-10D.

The backend server can implement any suitable communications technology, including for example GSM/GPRS technology, CDMA or CDMA2000 technology, LTE technology, 5G, etc. The hardware components of the backend server 20 are generally known in the art.

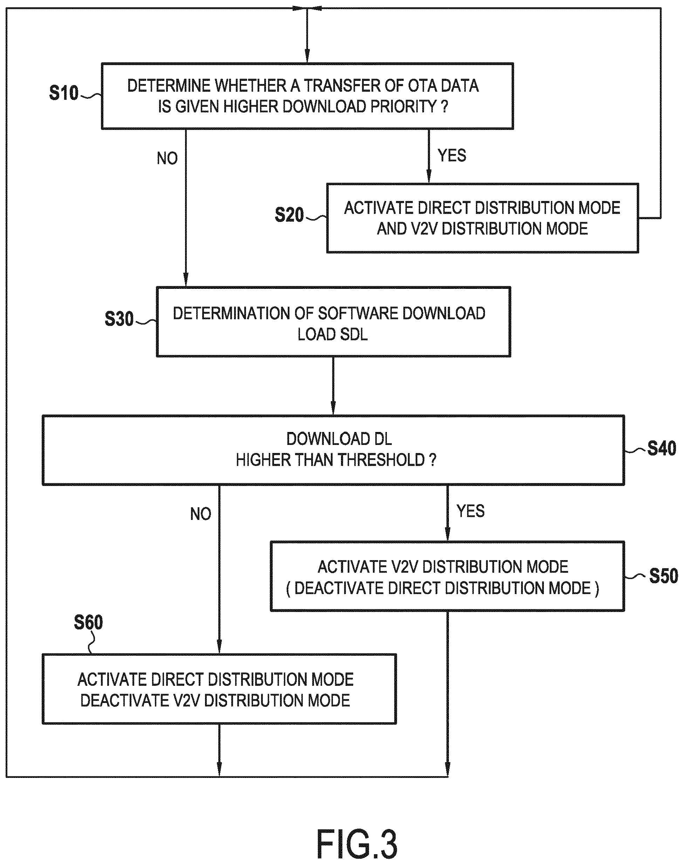

Embodiments of methods according to the present disclosure will now be presented in relation with Figs.3 to 5.

The computer 22 is capable of executing several programs in parallel. In embodiments, it comprises a main program MP, a V2V distribution program V2VP, and a direct distribution program DP. Each of these programs is configured to be executed constantly, iteratively.

The functions performed by the main program MP are shown on Fig.3.

In a first step S10, the backend server determines whether a transfer of OTA data has to be done, and whether this transfer is given higher download priority. In this case, the transfer has to be done urgently. This determination is usually made by the backend server 20 based on information received from an external entity. For instance, the fleet manager managing the fleet of vehicles 10 might conclude at some point that the software of the ECU1 of each vehicle of the fleet needs to be updated urgently: He or she then sends an order to the backend server 20 to immediately transmit an update of the software code (as an example of OTA data) of the ECU1 to all vehicles of fleet 10.

If is it determined that a transfer of OTA data has to be done urgently, the program jumps to step S20.

At step S20, since it has been determined that the transfer of the OTA data is given higher download priority, the backend server 20 activates both the direct distribution mode and the V2V distribution mode. That is, these two distribution modes are activated simultaneously, in order to transfer the OTA data as quickly as possible to the vehicles, regardless of the download load DL of the backend server.

On the other hand, if it is not determined that a transfer of OTA data is given higher download priority, the program jumps to step S30.

At step S30, the backup server 20 determines the download load DL of the backend server.

The program then jumps to step S40, in which the backend server determines whether the download load DL is above a predetermined threshold.

If at step S40 it is determined that the download load DL is above the threshold, the program jumps to step S50, in which the backend server activates the V2V distribution mode for distributing OTA data to the fleet. Conversely, at the same time, the backend server deactivates the direct distribution mode. Consequently, the download load of the backend server is reduced, but the transfer of the OTA load to some vehicles may be slightly delayed.

Note that in some embodiments, at step S50, the distribution mode is not deactivated (for this reason, this action is between brackets in box S50 of Fig.3). This means that at step S50, the V2V mode is activated but the direct distribution mode remains activated. In this case, the download load of the backend server is reduced as compared as in the direct distribution mode, but the reduction is lower than in the case where the direct distribution mode is deactivated at step S50.

Conversely, if at step S40 it is determined that the download load DL is not above the threshold, the program jumps to step S60, in which the backend server activates the direct distribution mode, and at the same time deactivates the V2V distribution mode.

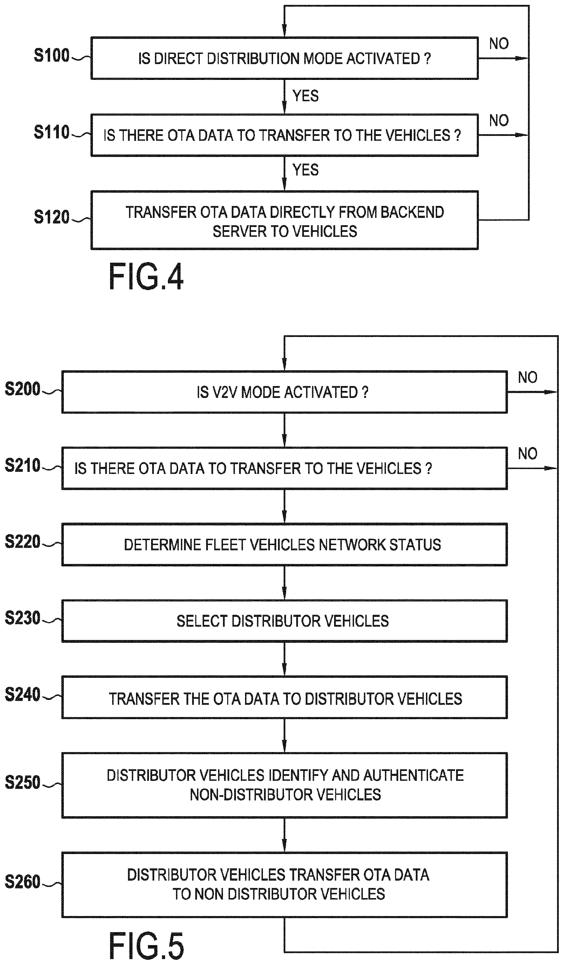

The way the OTA data is transferred to the vehicles of the fleet respectively in the direct distribution mode and in the V2V distribution mode will now be explained in relation with Figs.4 and 5.

Fig.4 shows the steps of the direct distribution program DP.

In a first step S100, the backend server determines if the direct distribution mode is activated.

While it is not the case, the program repeats step S100.

When it is determined that the direct distribution mode is activated, the program continues to step S110, in which the backend server determines whether there is OTA data to distribute.

If it is determined at step S110 that there is no OTA data to transfer (to-be-transferred OTA data), the program jumps back to step S100.

If conversely, it is determined at step S110 that there is OTA data to distribute, the backend server 20 transfers or at least attempts to transfer the to-be-transferred OTA data, directly to the vehicles of the fleet (step S120).

Accordingly, when the direct distribution mode is activated, by executing the direct distribution program DP, the backend server 20 causes OTA data to be transferred directly from server 20 to the vehicles of the fleet (Arrows A on Fig.1).

Fig.5 shows the steps of the V2V distribution program V2VP.

By contrast with the direct distribution program, when the V2V distribution mode is activated, by executing the V2V distribution program V2VP, the backend server 20 causes OTA data to be transferred indirectly from server 20 to the vehicles of the fleet: at least for the non-distributor vehicles, the OTA data is transferred in two steps: The OTA data is first transferred from the backend server 20 to a distributor vehicle, and then from a distributor vehicle to a non-distributor vehicle.

This is illustrated by Fig.1.

In the embodiment shown on Fig.1, two vehicles are selected by the backend server 20 to be distributor vehicles: the vehicles 10A and 10C. These vehicles are selected because the data exchange speed between the server 20 and these vehicles is higher than that between the server and each of vehicles 10B and 10D. Consequently, vehicles 10B and 10D are non-distributor vehicles.

In the V2V distribution mode, OTA data that is to be transferred to the vehicles of the fleet is transferred as follows:
In step S200, the backend server determines if the V2V distribution mode is activated.

While it is not the case, the program repeats step S200.

When it is determined that the V2V distribution mode is activated, the program continues to step S210, in which the backend server determines whether there is OTA data to distribute.

If it is determined at step S210 that there is no OTA data to transfer (to-be-transferred OTA data), the program jumps back to step S200.

If conversely, it is determined at step S210 that there is OTA data to distribute, the program jumps to step S220.

At step S220, the backend server determines the network status of each vehicle of the fleet 10. The network status means herein the data exchange rate between the vehicle and the backend server at this time.

Then, on this basis at step S230 the backend server selects the distributor vehicles (In the present case, vehicles 10A and 10C are selected).

Then, at step S240 the backend server transfers the OTA data, or at least attempts to transfer this data, to the distributor vehicles. This transfer, of course, does not take place at the same time for all the vehicles of a fleet of vehicles. It can be executed over a number of loops of the program.

In addition, the backend server transmits to the distributor vehicles a distribution task of transferring said to-be-transferred OTA data from the distributor vehicles to the non-distributor vehicles.

The next steps of the method are therefore carried out by the distributor and non-distributor vehicles, and essentially, by the gateway units 16 of these vehicles.

At step S240 (possibly over a number of iterations of the V2V distribution program), in each distributor vehicle, the gateway unit receives the to-be-transferred OTA data and the associated distribution tasks.

Then, at step S250, each distributor vehicle identifies any non-distributor vehicle present in the vicinity of the distributor vehicle. Each distributor vehicle tries to establish contact with the identified non-distributor vehicle(s), and then tries to authenticate the non-distributor vehicle.

Then at step S260, each distributor vehicle (10A,10C) transmits, or at least tries to transmit, the OTA data to the identified and authenticated non-distributor vehicle(s) (10B,10D).

The program then jumps back at step S200.

Accordingly, when the V2V distribution mode is activated, by executing the direct distribution program V1VP, the backend server 20 causes OTA data to be transferred from server 20 to the distributor vehicles (10A,10C) of the fleet (Arrows A on Fig.1) ; then, the OTA data is transferred from the distributor vehicles to non-distributor vehicles (10B,10D; arrows B on Fig.1).

In some embodiments, the non-distributor vehicles may be further configured, when they receive OTA data, to transfer the OTA data to any non-distributor vehicle that they identify in their surroundings.

Although the present disclosure herein has been described with reference to particular embodiments, it is to be understood that these embodiments are merely illustrative of the principles and applications of the present disclosure. For instance, although the present disclosure has been presented in the case where the vehicles are road vehicles, it should be understood that the present disclosure is applicable to any kind of vehicles.

It is intended that the specification and examples be considered as exemplary only, with a true scope of the disclosure being indicated by the claims.

## Claims

1. A computer-implemented method for transferring data over the air (OTA) from a backend server (20) to a fleet of vehicles (10), the method comprising:
S30) determining a download load (DL) of the backend server;
S40) determining whether the download load (DL) is above a threshold;
S50) when it is determined that the download load (DL) is above the threshold, activating a V2V distribution mode for distributing the data over the air (OTA) to the fleet;
S60) when it is determined that the download load (DL) is below the threshold, deactivating the V2V distribution mode and activating a direct distribution mode for distributing the data over the air (OTA) to the fleet;
wherein the method comprises:
when the V2V distribution mode is activated:
when data is to be transferred over the air (OTA) to vehicles of the fleet:
S230) selecting vehicles of the fleet as distributor vehicles (10A,10C);
S240) transferring or attempting to transfer the data over the air (OTA) from the backend server (20) to the distributor vehicles (10A,10C);
S260) transferring or attempting to transfer said data over the air (OTA) from at least one distributor vehicle (10A,10C) to at least one non-distributor vehicle (10B,10D) of the fleet; and,
when the direct distribution mode is activated:
S120) when data is to be transferred over the air (OTA) to vehicles of the fleet, transferring or attempting to transfer the data over the air (OTA) to all vehicles of the fleet of vehicles directly from the backend server (20) to the vehicles.

2. The method according to claim 1, further comprising, when it is determined that the download load (DL) is above the threshold, deactivating the direct distribution mode, so as to limit transfers of data over the air (OTA) from the backend server only to transfers from the backend server to the distributor vehicles (10A,10C).

3. The method according to claim 1 or 2, further comprising:
S10) determining whether a transfer of data over the air (OTA) is given higher download priority; and
S20) when it is determined that the transfer of the data over the air (OTA) is given higher download priority, activating the direct distribution mode and the V2V distribution mode regardless of the download load (DL) of the backend server (20).

4. The method according to any one of claims 1 to 3, wherein the distributor vehicles (10A,10C) are selected based at least on a data exchange speed thereof with the backend server (20).

5. A backend server (20) comprising:
one or more processors (221);
a network interface (24) coupled to the one or more processors (221), the network interface configured for communication with at least one vehicle of a fleet of vehicles (10); and
a computer-readable medium (222) comprising computer instructions stored therein, wherein the instructions, when executed by the one or more processors, cause the one or more processors to:
S30) determine download load (DL) of the backend server (20);
S40) determine whether the download load (DL) is above a threshold;
S50) when it is determined that the download load (DL) is above a threshold, activate a V2V distribution mode for distributing data over the air (OTA) to the fleet;
S60) when it is determined that the download load (DL) is below the threshold, deactivate the V2V distribution mode and activate a direct distribution mode for distributing the data over the air (OTA) to the fleet; wherein the instructions, when executed by the one or more processors while the V2V distribution mode is activated, cause the one or more processors to:
when data is to be transferred over the air to vehicles of the fleet:
S230) select vehicles (10A,10C) of the fleet as distributor vehicles (10A,10C);
S240) transfer or attempt to transfer the data over the air (OTA) from the server (20) to the distributor vehicles (10A,10C) but not to the non-distributor vehicles (10B,10D); and
wherein the instructions, when executed by the one or more processors when the direct distribution mode is activated, cause the one or more processors to:
S120) when data is to be transferred over the air (OTA) to vehicles of the fleet, transfer or attempt to transfer the data over the air (OTA) to all vehicles of the fleet of vehicles directly from the backend server (20) to the vehicles.

6. A backend server (20) according to claim 5, wherein the instructions, when executed by the one or more processors while the V2V distribution mode is activated, further cause the one or more processors to:
S240) transmit to the distributor vehicles (10A,10C) a distribution task of transferring said to-be-transferred-over the-air (OTA)data from the distributor vehicle (10A,10C) to non-distributor vehicles (10B,10D) of the fleet.

7. A backend server (20) according to claim 5 or 6, wherein the instructions, when executed by the one or more processors (221), further cause the one or more processors, when it is determined that the download load (DL) is above a threshold, to deactivate the direct distribution mode, so as to limit transfers of data over the air (OTA) from the backend server (20) only to transfers from the backend server to the distributor vehicles (10A,10C).

8. A backend server (20) according to any one of claims 5 to 7, wherein the instructions, when executed by the one or more processors (221), further cause the one or more processors:
S10) to determine whether a transfer of data over the air (OTA) is given higher download priority; and
S20) when it is determined that the transfer of the data over the air (OTA) is given higher download priority, to activate the direct distribution mode and the V2V distribution mode regardless of the download load (DL) of the backend server (20).

9. A backend server (20) according to any one of claims 5 to 8, wherein the instructions, when executed by the one or more processors (221), cause the one or more processors to select the distributor vehicles (10A,10C) based at least on their data exchange speed with the backend server (20).

10. A transportation system comprising a fleet of vehicles and at least one backend server (20) according to any one of claims 5 to 9, wherein at least one vehicle (10) comprises:
a connectivity unit (12) configured to send and receive data to and from the server and the other vehicles of the fleet; and
a gateway unit (16) configured:
- to receive, via the connectivity unit (12), information that the V2V distribution mode is activated;
- to receive, via the connectivity unit (12), data to be transferred over the air (OTA) to vehicles of the fleet; and
- when the V2V distribution mode is activated and when data transferred over the air (OTA) has been received, to transfer or to attempt to transfer the data transferred over the air (OTA) to other vehicles of the fleet via the connectivity unit.

11. A transportation system according to claim 10, wherein the fleet of vehicles comprises a plurality of vehicles of at least one of the following categories: road vehicles, aerial vehicles, marine vehicles, manned vehicles, unmanned vehicles, mobile machines, mobile robots.

12. One or more computer program(s) (MP,V2VP,DP) comprising instructions which, when the instructions are executed by a computer (22), cause the computer to carry out the steps of a method according to any one of claims 1 to 4.

13. A non-transitory computer-readable medium (222) having stored thereon the one or more computer program(s) according to claim 12.

## Patentansprüche

1. Computerimplementiertes Verfahren zur Übertragung von Daten per Funk (OTA) von einem Back-End-Server (20) zu einer Flotte von Fahrzeugen (10), wobei das Verfahren umfasst:
S30) Bestimmen einer Download-Last (DL) des Back-End-Servers,
S40) Feststellen, ob die Download-Last (DL) über einem Schwellenwert liegt,
S50), wenn festgestellt wird, dass die Download-Last (DL) über dem Schwellenwert liegt, Aktivieren eines V2V-Verteilungsmodus zur Verteilung der Daten per Funk (OTA) an die Flotte,
S60), wenn festgestellt wird, dass die Download-Last (DL) unter dem Schwellenwert liegt, Deaktivieren des V2V-Verteilungsmodus und Aktivieren eines direkten Verteilungsmodus zur Verteilung der Daten per Funk (OTA) an die Flotte,
wobei das Verfahren umfasst:
wenn der V2V-Verteilungsmodus aktiviert ist:
wenn Daten per Funk (OTA) an die Fahrzeuge der Flotte übertragen werden sollen:
S230) Auswählen von Fahrzeugen der Flotte als Verteilerfahrzeuge (10A, 10C),
S240) Übertragen der Daten per Funk (OTA) vom Back-End-Server (20) zu den Verteilerfahrzeugen (10A, 10C) oder Versuchen, sie zu übertragen,
S260) Übertragen der Daten per Funk (OTA) von mindestens einem Verteilerfahrzeug (10A, 10C) zu mindestens einem Nicht-Verteilerfahrzeug (10B, 10D) der Flotte oder Versuchen, sie zu übertragen, und,
wenn der direkte Verteilungsmodus aktiviert ist:
S120) wenn Daten per Funk (OTA) an Fahrzeuge der Flotte übertragen werden sollen, Übertagen der Daten per Funk (OTA) an alle Fahrzeuge der Fahrzeugflotte direkt vom Back-End-Server (20) an die Fahrzeuge oder Versuchen, sie zu übertragen.

2. Verfahren nach Anspruch 1, ferner umfassend, dass, wenn festgestellt wird, dass die Download-Last (DL) über dem Schwellenwert liegt, der direkte Verteilungsmodus deaktiviert wird, um die Übertragungen von Daten per Funk (OTA) von dem Back-End-Server nur auf Übertragungen von dem Back-End-Server zu den Verteilerfahrzeugen (10A, 10C) zu beschränken.

3. Verfahren nach Anspruch 1 oder 2, ferner umfassend:
S10) Bestimmen, ob einer Übertragung von Daten per Funk (OTA) eine höhere Download-Priorität gegeben ist, und
S20), wenn festgestellt wird, dass der Übertragung der Daten per Funk (OTA) eine höhere Download-Priorität gegeben ist, Aktivieren des direkten Verteilungsmodus und des V2V-Verteilungsmodus unabhängig von der Download-Last (DL) des Back-End-Servers (20).

4. Verfahren nach einem der Ansprüche 1 bis 3, wobei die Verteilerfahrzeuge (10A, 10C) zumindest auf der Grundlage ihrer Datenaustauschgeschwindigkeit mit dem Back-End-Server (20) ausgewählt werden.

5. Back-End-Server (20), umfassend:
einen oder mehrere Prozessoren (221),
eine Netzschnittstelle (24), die mit dem einen oder den mehreren Prozessoren (221) verbunden ist, wobei die Netzschnittstelle für die Kommunikation mit mindestens einem Fahrzeug einer Fahrzeugflotte (10) konfiguriert ist, und
ein computerlesbares Medium (222), das darin gespeicherte Computeranweisungen umfasst, wobei die Anweisungen, wenn sie von dem einen oder den mehreren Prozessoren ausgeführt werden, den einen oder die mehreren Prozessoren veranlassen:
S30) die Download-Last (DL) des Back-End-Servers (20) zu bestimmen,
S40) festzustellen, ob die Download-Last (DL) über einem Schwellenwert liegt,
S50) wenn festgestellt wird, dass die Download-Last (DL) über einem Schwellenwert liegt, einen V2V-Verteilungsmodus für die Verteilung von Daten per Funk (OTA) an die Flotte zu aktivieren,
S60) wenn festgestellt wird, dass die Download-Last (DL) unter dem Schwellenwert liegt, den V2V-Verteilungsmodus zu deaktivieren und einen direkten Verteilungsmodus zur Verteilung der Daten per Funk (OTA) an die Flotte zu aktivieren,
wobei die Anweisungen, wenn sie von dem einen oder den mehreren Prozessoren ausgeführt werden, während der V2V-Verteilungsmodus aktiviert ist, den einen oder die mehreren Prozessoren dazu veranlassen:
wenn Daten per Funk an Fahrzeuge der Flotte übertragen werden sollen:
S230) Fahrzeuge (10A, 10C) der Flotte als Verteilerfahrzeuge (10A, 10C) auszuwählen,
S240) Daten per Funk (OTA) vom Server (20) zu den Verteilerfahrzeugen (10A, 10C), aber nicht zu den Nicht-Verteilerfahrzeugen (10B, 10D), zu übertragen oder zu versuchen, sie zu übertragen, und
wobei die Anweisungen, wenn sie von dem einen oder den mehreren Prozessoren ausgeführt werden, wenn der Direktverteilungsmodus aktiviert ist, den einen oder die mehreren Prozessoren veranlassen:
S120) wenn Daten per Funk (OTA) an die Fahrzeuge der Flotte übertragen werden sollen, die Daten per Funk (OTA) an alle Fahrzeuge der Fahrzeugflotte direkt vom Back-End-Server (20) an die Fahrzeuge zu übertragen oder zu versuchen, sie zu übertragen.

6. Back-End-Server (20) nach Anspruch 5, wobei die Anweisungen, wenn sie von dem einen oder den mehreren Prozessoren ausgeführt werden, während der V2V-Verteilungsmodus aktiviert ist, ferner den einen oder die mehreren Prozessoren veranlassen,:
S240) an die Verteilerfahrzeuge (10A, 10C) eine Verteilungsaufgabe zur Übertragung der per Funk (OTA) zu übertragenden Daten vom Verteilerfahrzeug (10A, 10C) an Nicht-Verteilerfahrzeuge (10B, 10D) der Flotte zu übertragen.

7. Back-End-Server (20) nach Anspruch 5 oder 6, wobei die Anweisungen, wenn sie von dem einen oder den mehreren Prozessoren (221) ausgeführt werden, ferner den einen oder die mehreren Prozessoren veranlassen, den direkten Verteilungsmodus zu deaktivieren, wenn festgestellt wird, dass die Download-Last (DL) über einem Schwellenwert liegt, um so die Übertragungen von Daten per Funk (OTA) von dem Back-End-Server (20) nur auf Übertragungen von dem Back-End-Server zu den Verteilerfahrzeugen (10A, 10C) zu beschränken.

8. Back-End-Server (20) nach einem der Ansprüche 5 bis 7, wobei die Anweisungen, wenn sie von dem einen oder den mehreren Prozessoren (221) ausgeführt werden, ferner den einen oder die mehreren Prozessoren veranlassen:
S10) zu bestimmen, ob einer Übertragung von Daten per Funk (OTA) eine höhere Download-Priorität gegeben ist, und
S20) wenn festgestellt wird, dass der Übertragung der Daten per Funk (OTA) eine höhere Download-Priorität gegeben ist, den direkten Verteilungsmodus und den V2V-Verteilungsmodus unabhängig von der Download-Last (DL) des Back-End-Servers (20) zu aktivieren.

9. Back-End-Server (20) nach einem der Ansprüche 5 bis 8, wobei die Anweisungen, wenn sie von dem einen oder den mehreren Prozessoren (221) ausgeführt werden, den einen oder die mehreren Prozessoren veranlassen, die Verteilerfahrzeuge (10A, 10C) zumindest auf der Grundlage ihrer Datenaustauschgeschwindigkeit mit dem Back-End-Server (20) auszuwählen.

10. Transportsystem mit einer Fahrzeugflotte und mindestens einem Back-End-Server (20) nach einem der Ansprüche 5 bis 9, wobei mindestens ein Fahrzeug (10) umfasst:
eine Konnektivitätseinheit (12), die dazu konfiguriert ist, Daten an den Server und die anderen Fahrzeuge der Flotte zu senden und von diesen zu empfangen, und
eine Gateway-Einheit (16), die dazu konfiguriert ist:
- über die Konnektivitätseinheit (12) Informationen zu empfangen, dass der V2V-Verteilungsmodus aktiviert ist,
- über die Konnektivitätseinheit (12) Daten zu empfangen, die per Funk (OTA) an die Fahrzeuge der Flotte übertragen werden sollen, und
- wenn der V2V-Verteilungsmodus aktiviert ist und wenn per Funk (OTA) übertragene Daten empfangen wurden, die per Funk (OTA) übertragenen Daten über die Konnektivitätseinheit an andere Fahrzeuge der Flotte zu übertragen oder zu versuchen, sie zu übertragen.

11. Transportsystem nach Anspruch 10, wobei die Fahrzeugflotte eine Vielzahl von Fahrzeugen aus mindestens einer der folgenden Kategorien umfasst:
Straßenfahrzeuge, Luftfahrzeuge, Wasserfahrzeuge, bemannte Fahrzeuge, unbemannte Fahrzeuge, mobile Maschinen, mobile Roboter.

12. Ein oder mehrere Computerprogramm(e) (MP, V2VP, DP) mit Befehlen, die, wenn die Befehle von einem Computer (22) ausgeführt werden, den Computer veranlassen, die Schritte eines Verfahrens nach einem der Ansprüche 1 bis 4 auszuführen.

13. Nicht-transitorisches computerlesbares Medium (222), auf dem das eine oder die mehreren Computerprogramme nach Anspruch 12 gespeichert sind.

## Revendications

1. Procédé mis en œuvre par ordinateur pour transférer des données par télédiffusion (OTA) depuis un serveur principal (20) jusqu'à une flotte de véhicules (10), le procédé comprenant :
S30) déterminer une charge de téléchargement (DL) du serveur principal ;
S40) déterminer si la charge de téléchargement (DL) est au-dessus d'un seuil ;
S50) lorsque l'on détermine que la charge de téléchargement (DL) est au-dessus du seuil, activer un mode de distribution V2V pour distribuer les données par télédiffusion (OTA) jusqu'à la flotte ;
S60) lorsque l'on détermine que la charge de téléchargement (DL) est en dessous du seuil, désactiver le mode de distribution V2V et activer un mode de distribution directe pour distribuer les données par télédiffusion (OTA) jusqu'à la flotte ; le procédé comprenant :
quand le mode de distribution V2V est activé :
quand des données doivent être transférées par télédiffusion (OTA) jusqu'aux véhicules de la flotte :
S230) sélectionner des véhicules de la flotte comme véhicules distributeurs (10A, 10C) ;
S240) transférer ou essayer de transférer les données par télédiffusion (OTA) depuis le serveur principal (20) jusqu'aux véhicules distributeurs (10A, 10C) ;
S260) transférer ou essayer de transférer lesdites données par télédiffusion (OTA) depuis au moins un véhicule distributeur (10A, 10C) jusqu'à au moins un véhicule non-distributeur (10B, 10D) de la flotte ; et,
quand le mode de distribution directe est activé :
S120) quand des données doivent être transférées par télédiffusion (OTA) jusqu'aux véhicules de la flotte, transférer ou essayer de transférer les données par télédiffusion (OTA) à tous les véhicules de la flotte de véhicules directement depuis le serveur principal (20) jusqu'aux véhicules.

2. Procédé selon la revendication 1, comprenant en outre, lorsque l'on détermine que la charge de téléchargement (DL) est au-dessus du seuil, la désactivation du mode de distribution directe, de façon à limiter des transferts de données par télédiffusion (OTA) à partir du serveur principal seulement à des transferts depuis le serveur principal jusqu'aux véhicules distributeurs (10A, 10C).

3. Procédé selon la revendication 1 ou 2, comprenant en outre :
S10) déterminer s'il est accordé une priorité de téléchargement plus élevée à un transfert de données par télédiffusion (OTA) ; et
S20) lorsque l'on détermine qu'une priorité de téléchargement plus élevée a été accordée au transfert de données par télédiffusion (OTA), activer le mode de distribution directe et le mode de distribution V2V indépendamment de la charge de téléchargement (DL) du serveur principal (20).

4. Procédé selon l'une quelconque des revendications 1 à 3, selon lequel les véhicules distributeurs (10A, 10C) sont sélectionnés sur la base au moins d'une vitesse d'échange de données de ceux-ci avec le serveur principal (20).

5. Serveur principal (20) comprenant :
un ou plusieurs processeurs (221) ;
une interface réseau (24) couplée aux un ou plusieurs processeurs (221), l'interface réseau étant configurée pour une communication avec au moins un véhicule d'une flotte de véhicules (10) ; et
un support lisible par ordinateur (222) comprenant des instructions d'ordinateur stockées dedans, les instructions, lorsqu'elles sont exécutées par les un ou plusieurs processeurs, amenant les un ou plusieurs processeurs à :
S30) déterminer la charge de téléchargement (DL) du serveur principal (20) ;
S40) déterminer si la charge de téléchargement (DL) est au-dessus d'un seuil ;
S50) lorsque l'on détermine que la charge de téléchargement (DL) est au-dessus d'un seuil, activer un mode de distribution V2V pour distribuer des données par télédiffusion (OTA) jusqu'à la flotte ;
S60) lorsque l'on détermine que la charge de téléchargement (DL) est en dessous du seuil, désactiver le mode de distribution V2V et activer un mode de distribution directe pour distribuer les données par télédiffusion (OTA) jusqu'à la flotte ;
les instructions, lorsqu'elles sont exécutées par les un ou plusieurs processeurs alors que le mode de distribution V2V est activé, amenant les un ou plusieurs processeurs à :
quand des données doivent être transférées par télédiffusion jusqu'aux véhicules de la flotte :
S230) sélectionner des véhicules (10A, 10C) de la flotte comme véhicules distributeurs (10A, 10C) ;
S240) transférer ou essayer de transférer les données par télédiffusion (OTA) depuis le serveur (20) jusqu'aux véhicules distributeurs (10A, 10C) mais pas aux véhicules non-distributeurs (10B, 10D) ; et
les instructions, lorsqu'elles sont exécutées par les un ou plusieurs processeurs quand le mode de distribution directe est activé, amenant les un ou plusieurs processeurs à :
S120) quand des données doivent être transférées par télédiffusion (OTA) jusqu'aux véhicules de la flotte, transférer ou essayer de transférer les données par télédiffusion (OTA) à tous les véhicules de la flotte de véhicules directement depuis le serveur principal (20) jusqu'aux véhicules.

6. Serveur principal (20) selon la revendication 5, dans lequel les instructions, lorsqu'elles sont exécutées par les un ou plusieurs processeurs alors que le mode de distribution V2V est activé, amènent en outre les un ou plusieurs processeurs à :
S240) transmettre aux véhicules distributeurs (10A, 10C) une tâche de distribution de transfert desdites données devant être transférées par télédiffusion (OTA) depuis le véhicule distributeur (10A, 10C) jusqu'à des véhicules non-distributeurs (10B, 10D) de la flotte.

7. Serveur principal (20) selon la revendication 5 ou 6, dans lequel les instructions, lorsqu'elles sont exécutées par les un ou plusieurs processeurs (221), amènent en outre les un ou plusieurs processeurs, lorsque l'on détermine que la charge de téléchargement (DL) est au-dessus d'un seuil, à désactiver le mode de distribution directe, de façon à limiter des transferts de données par télédiffusion (OTA) à partir du serveur principal (20) seulement à des transferts depuis le serveur principal jusqu'aux véhicules distributeurs (10A, 10C).

8. Serveur principal (20) selon l'une quelconque des revendications 5 à 7, dans lequel les instructions, lorsqu'elles sont exécutées par les un ou plusieurs processeurs (221), amènent en outre les un ou plusieurs processeurs :
S10) à déterminer si une priorité de téléchargement plus élevée est accordée à un transfert de données par télédiffusion (OTA) ; et
S20) lorsque l'on détermine qu'une priorité de téléchargement plus élevée est accordée au transfert des données par télédiffusion (OTA), à activer le mode de distribution directe et le mode de distribution V2V indépendamment de la charge de téléchargement (DL) du serveur principal (20).

9. Serveur principal (20) selon l'une quelconque des revendications 5 à 8, dans lequel les instructions, lorsqu'elles sont exécutées par les un ou plusieurs processeurs (221), amènent les un ou plusieurs processeurs à sélectionner les véhicules distributeurs (10A, 10C) sur la base au moins de leur vitesse d'échange de données avec le serveur principal (20).

10. Système de transport comprenant une flotte de véhicules et au moins un serveur principal (20) selon l'une quelconque des revendications 5 à 9, dans lequel au moins un véhicule (10) comprend :
une unité de connectivité (12) configurée pour envoyer et recevoir des données à et depuis le serveur et les autres véhicules de la flotte ; et
une unité de passerelle (16) configurée :
pour recevoir, par l'intermédiaire de l'unité de connectivité (12), l'information que le mode de distribution V2V est activé ;
pour recevoir, par l'intermédiaire de l'unité de connectivité (12), des données devant être transférées par télédiffusion (OTA) jusqu'aux véhicules de la flotte ; et
quand le mode de distribution V2V est activé et quand des données transférées par télédiffusion (OTA) ont été reçues, pour transférer ou pour essayer de transférer les données transférées par télédiffusion (OTA) à d'autres véhicules de la flotte par l'intermédiaire de l'unité de connectivité.

11. Système de transport selon la revendication 10, dans lequel la flotte de véhicules comprend une pluralité de véhicules de au moins une des catégories suivantes : véhicules routiers, véhicules aériens, véhicules marins, véhicules avec conducteur, véhicules sans conducteur, machines mobiles, robots mobiles.

12. Un ou plusieurs programmes informatiques (MP, V2VP, DP) comprenant des instructions qui, quand les instructions sont exécutées par un ordinateur (22), amènent l'ordinateur à mettre en œuvre les étapes d'un procédé selon l'une quelconque des revendications 1 à 4.

13. Support non-transitoire lisible par ordinateur (222) dans lequel sont stockés les un ou plusieurs programmes informatiques selon la revendication 12.
